# EUROPEAN PATENT SPECIFICATION

(11) **EP 2 370 215 B1**
(45) Date of publication and mention of the grant of the patent: **21.01.2015**
(21) Application number: 09796039.7
(22) Date of filing: 27.11.2009
(51) Int. Cl.: B21D 53/36, F16L 3/123

(54) **METHOD FOR FORMING A CLIP**
VERFAHREN ZUR HERSTELLUNG EINER KLAMMER
PROCÉDÉ POUR FORMER UNE BRIDE

(30) Priority: 27.11.2008 GB 0821682
(43) Date of publication of application: 05.10.2011
(73) Proprietor: Tappex Thread Inserts Limited, Stratford-on-Avon, Warwickshire CV37 9NT (GB)
(72) Inventor: GREATOREX, James, Wellesbourne Warwickshire CV35 9RU (GB)
(74) Representative: Symons, Rupert Jonathan
(86) International application number: PCT/GB2009/051613
(87) International publication number: WO 2010/061227

(56) References cited:
- GB-A- 718 527
- US-A- 4 621 515

## Description

This invention relates generally to clips and particularly to a method of making them. More specifically, it relates to fastening clips, clasps or brackets with a resilient insert for providing an interference fit between the clip or clasp and an object to be received therein. Such clips are for example known from the generic patent document GB-718527 A.

One known fastening clip, sometimes referred to as a P-clip, includes a bracket made of stamped sheet metal formed into a partial tubular structure with opposed spaced edges, each of which carries a respective flange. In use, a grommet is fitted around a rod or pipe and the bracket is wrapped around the grommet. Each flange includes an opposed hole for receiving a fastener. In use, a bolt is inserted through both holes, through a further hole of an object (e.g. the frame of an automobile) and threadedly engages a nut. The flanges and object are brought together and secured using the nut, thereby clamping the grommet and rod or pipe within the bracket.

In an effort to reduce the time required to fit the aforementioned P-clip, a modified grommet has been proposed which includes an oversized end which allows it to be inserted into the tubular structure before use. However, this arrangement does not provide positive location of the grommet and it requires a pre-shaped grommet arranged to retain its circular or tubular shape.

An alternative arrangement of clip incorporates a straight strip of steel with holes in the end and formed to the required diameter. An extended resilient member is applied to the clip and slid on to it from one end in an interference type fit.

It is therefore an object of the invention to provide a method of making a clip or clasp or bracket which overcomes or at least mitigates these issues. In particular, it is a specific object of this invention to provide a method of making a clip having a resilient member and connecting portions.

According to the invention there is provided a method of making a clip according to claim 1.

The provision of a projection which engages an aperture provides a simple retaining means to overcome the aforementioned difficulties during assembly. Moreover, this positive retention means facilitates the use of a flat, e.g. extruded, resilient member in place of a grommet of a specific diameter.

Preferably, the aperture is in the clamp and the projection is on the resilient member. More preferably, the aperture is a slot and/or the projection has an enlarged portion, e.g. head portion, which may provide a snap-type fastener or fastener means. The slot and/or projection may extend about some, most or substantially all of the intermediate portion, e.g. the circumference thereof in use. The resilient member may advantageously be wider than the intermediate portion and/or include locating means, for example in the form of one or two radial flanges which may abut or lie adjacent to the axial end edge or edges of the intermediate portion.

The opposed connecting portions (flanges) may extend radially and/or axially of the intermediate portion. More preferably, each opposed connecting portion (flange) includes a hole for receiving a fastener for clamping them together and/or securing the clip or clamp member and/or resilient member in use.

The clamp member may be formed of sheet material, for example metallic sheet material such as steel. Preferably, the clamp member is formed of low carbon steel, for example hot rolled low carbon steel. The resilient member may be formed of an elastomeric material such as neoprene.

The invention provides a simple process for making a clip by securing the resilient member to the clamp member during the pressing step of the manufacturing process.

The engaging of the members may be effected by an oversized head portion of the projection, for example which resiliently deforms as it is pressed into the aperture and/or returns to its original shape to retain the members together.

Preferably, the resilient member is formed by extrusion and/or is substantially flat prior to the stamping step. More preferably, the projection and/or a locator means, for example a peripheral wall extending along one or both longitudinal edges of the extrusion, is or are formed on the resilient member.

One embodiment of the invention will now be described by way of example only with reference to the accompanying drawings in which:
Figure 1 is a perspective view of a clip according to the invention in an assembled and clamping condition;
Figure 2A is an end view of the clip of Figure 1 in a rest condition;
Figure 2B is a cross-section through line A-A of Figure 2A;
Figure 3A is a plan view of a flat blank for forming the clamp member of the clip of Figures 1 to 2B;
Figure 3B is a side view of the blank of Figure 3A in a partially formed condition;
Figure 4A is a top view of the resilient member of the clip of Figures 1 to 2B
Figure 4B is a side view from direction B of the resilient member of Figure 4A; and
Figure 5 is a schematic view of the method of making a clip according to the invention.

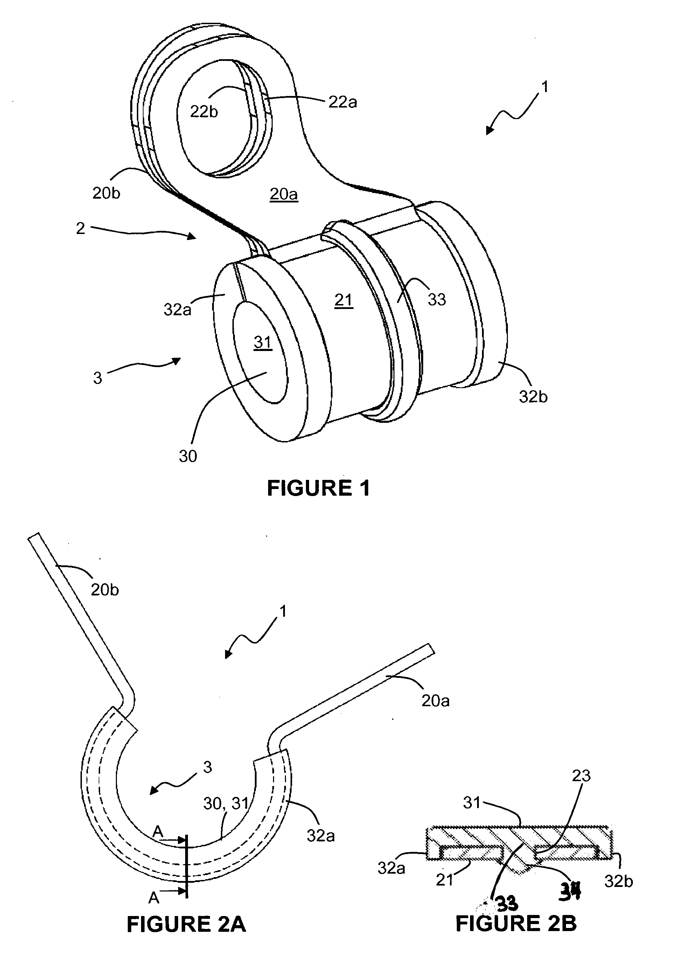

Referring to Figures 1 to 2B, there is shown a tubular clip 1 including a clamp member 2 and a resilient member 3. The clip 1 is arranged to surround and clamp an object (not shown) such as a rod or pipe using the clamp member 2 to squeeze the resilient member 3 against the object (not shown).

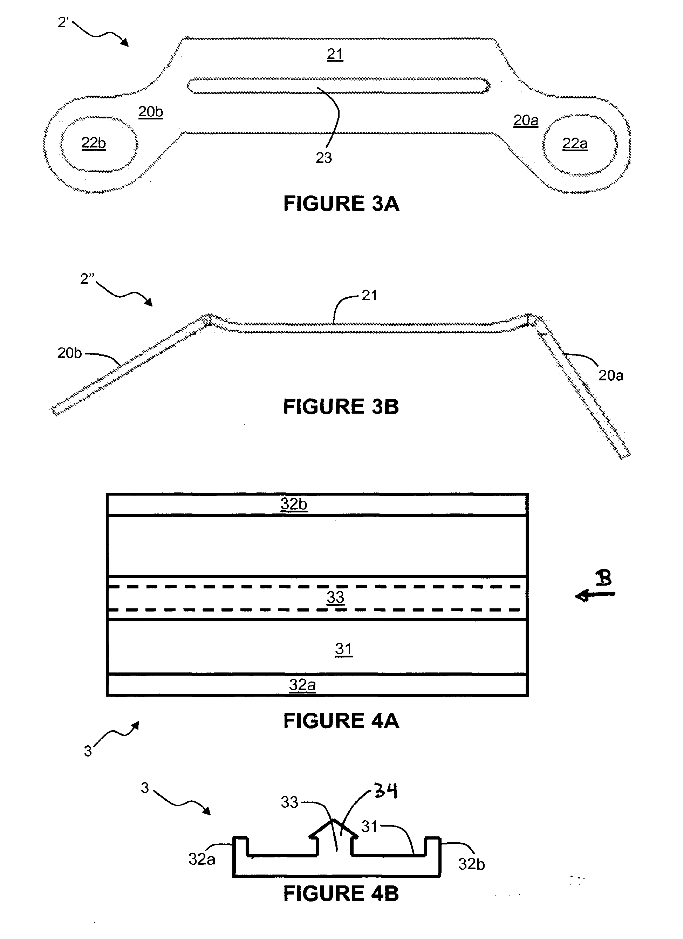

In this embodiment, the clamp member 2 is made of hot rolled low carbon sheet steel and includes a pair of opposed connecting portions (opposed flanges) 20a, 20b which are interconnected by a tubular intermediate portion 21. Each opposed connecting portion (flange) 20a, 20b includes an oval fastening hole 22a, 22b through its thickness and extends radially from the intermediate portion 21 and at an angle of approximately 45 degrees from the axis thereof. The intermediate portion 21, shown more clearly in the clamp member blank 2' of Figure 3A, includes a slot 23 along the whole of its length in this embodiment. Figure 3B shows the clamp member blank 2" in a partially formed condition, wherein the opposed connecting portions (flanges) 20a, 20b have been stamped to extend at respective different angles with respect to the substantially flat intermediate portion 21.

The resilient member 3 is in the form of an extruded body 30 of neoprene in this embodiment and includes a substantially flat base 31 (shown more clearly in Figures 4A and 4B) with a pair of peripheral walls 32a, 32b extending upwardly from each longitudinal edge and a projecting member 33 extending along a central portion thereof between the peripheral walls. The projecting member 33 includes an oversized triangular head portion 34, thereby forming an arrow-like projection 33.

In the assembled condition shown in both Figures 1 and 2A, the projection 33 of the resilient member 3 extends through the slot 23 of the clamp member 2 and the intermediate portion 21 is surrounded by the peripheral walls 32a, 32b. This positive engagement between the projection 33 and slot 23 along the entire length of the resilient member 3 causes it to retain the circular or tubular shape of the intermediate portion 21. The location between the walls 32a, 32b and intermediate portion 21 also minimise the amount of play between the members 2, 3. Thus, when the clip 1 is to be clamped around an object (not shown), the resilient member 3 may be wrapped around the object (not shown) using the opposed connecting portions (flanges) 20a, 20b.

More specifically, the opposed connecting portions (flanges) 20a, 20b are first separated to open the clip 1 sufficiently for it to receive the object (not shown). The opposed connecting portions (flanges) 20a, 20b are then brought together by a fastener (not shown), such as a bolt extending there through, and secured as required, for example to the frame of an automobile.

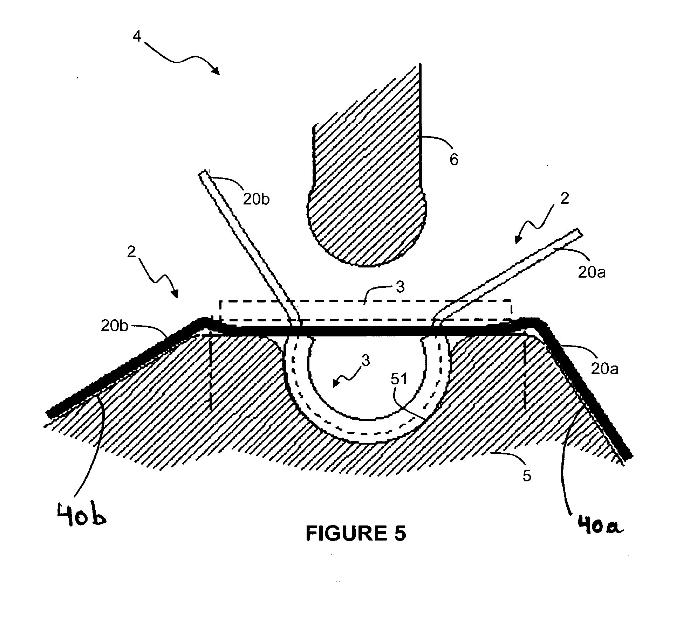

Figure 5 illustrates one method of making a clip 1 according to the invention using an apparatus 4 which includes a die 5 having a depression 51 shaped to correspond substantially to the intended outer shape of the finished clip 1. The apparatus 4 also includes a punch member 6 shaped to correspond substantially to the intended inner shape of the finished clip 1. It will be appreciated by those skilled in the art that the clamp member 2 will have some residual resilience and so the depression 51 and the punch member 6 do not correspond to the precise finished shape.

The method of making the clip 1 involves placing a partially formed clamp member 2 as described above with reference to Figure 3B onto a die 5 having surfaces 40a, 40b which cooperate with the angled opposed connecting portions (flanges) 20a, 20b. A substantially flat resilient member 3 as described above with reference to Figures 4A and 4B is then placed with the projection 33 facing down onto the substantially flat intermediate portion 21 of the clamp member 2. The resilient member 3 is placed with the tapered upper surfaces of the enlarged head portion 34 abutting the side edges of the slot 23 of the clamp member 2 and the inner surface of each peripheral wall 32a, 32b lying along the longitudinal outer edges of the intermediate portion 21 of the clamp member 2, thereby to protect the outer edges of the clamp 2.

The punch 6 is then lowered onto the resilient member 3 and presses or forms the resilient member 3 and the intermediate portion 21 of the clamp 2 into the depression 51 to form the substantially tubular clip 1. As the punch 6 urges the resilient member 3 against the intermediate portion 21, the projection 33 is urged into the slot 23 by resiliently deforming the head portion 34 until it penetrates to the other side of the slot 23 and engagement is thereby effected.

A resilient member 2 suitable for the clip 1 and/or the method described above may advantageously be formed by an extrusion process, thus significantly reducing its cost.

Particularly useful are clips having an offset between the connecting portions, the holes in the clip and the centre line of the clip surrounding the clamped tube.

The term clip is intended to include brackets, and other protective sheath connectors incorporating the invention. Such brackets include a resilient member and connecting portions that can employ various known fastening methods, for example a latch plate arrangement, without departing from the scope of the invention, solely defined by the appended claims.

It will be appreciated by those skilled in the art that several variations are envisaged without departing from the scope of the invention. In particular, any number of combinations of the aforementioned features and/or those shown in the appended drawings provide clear advantages over the prior art and are therefore within the scope of the invention described herein.

## Claims

1. A method of making a clip (1) by placing a resilient member (3) on an intermediate portion (21) of a clamp member (2) between two opposed connecting portions (20a, 20b) thereof, **characterised by** using a punch (6) and a die (5) with a depression (51) for pressing the resilient member (3) and the intermediate portion (21) of the clamp member (2) together into the depression (51) to form a substantially tubular clip (1), a projection (33) of one of the members (2;3) being pressed into and engaged with an aperture (23) of the other member (3;2) during the pressing step, thereby to retain the resilient member (3) to and within the clamp member (2).

2. Method according to claim 1, wherein the engaging of the members (2, 3) is effected by an oversized head portion (34) of the projection (33).

3. Method according to any one of claims 1 or 2, wherein the resilient member (3) is formed prior to the pressing step by an extrusion step.

4. Method according to claim 3, wherein the projection (33) is formed on the resilient member (3) during the extrusion step.

5. Method according to claim 3 or claim 4, wherein a locator means in the form of a peripheral wall (32a, 32b) extending along one or both longitudinal edges of the resilient member (33) is or are formed on the resilient member (3) during the extrusion step.

## Patentansprüche

1. Verfahren zum Herstellen einer Klammer (1), indem ein elastisches Element (3) auf einen Zwischenabschnitt (21) eines Klemmelements (2) zwischen zwei gegenüber liegenden Verbindungspunkten (20a, 20b) desselben platziert wird, **dadurch gekennzeichnet, dass** ein Stempel (6) und eine Matrize (5) mit einer Vertiefung (51) benutzt werden, um das elastische Element (3) zusammen mit dem Zwischenabschnitt (21) des Klemmelements (2) in die Vertiefung (51) zu pressen, um eine im Wesentlichen röhrenförmige Klammer (1) auszubilden, wobei während des Pressvorgangs ein Vorsprung (33) eines der Elemente (2, 3) in eine Öffnung (23) des anderen Elements (3, 2) gepresst und darin eingerastet wird, um dadurch das elastische Element (3) an und in dem Klemmelement (2) festzuhalten.

2. Verfahren nach Anspruch 1, wobei das Einrasten der Elemente (2, 3) durch einen überbemessenen Kopfabschnitt (34) des Vorsprungs (33) bewirkt wird.

3. Verfahren nach einem der Ansprüche 1 oder 2, wobei das elastische Element (3) durch einen Extrudiervorgang vor dem Pressvorgang ausgebildet wird.

4. Verfahren nach Anspruch 3, wobei der Vorsprung (33) auf dem elastischen Element (3) während des Extrudiervorgangs ausgebildet wird.

5. Verfahren nach Anspruch 3 oder Anspruch 4, wobei ein Positionierungsmittel in Form einer umlaufend angeordneten Wand (32a, 32b), die sich entlang einer oder beider Längskanten des elastischen Elements (33) erstreckt, auf dem elastischen Element (3) während des Extrudiervorgangs ausgebildet wird.

## Revendications

1. Procédé de fabrication d'une attache (1) en plaçant un élément élastique (3) sur une partie intermédiaire (21) d'un élément de serrage (2) entre deux de ses parties de raccordement opposées (20a, 20b), **caractérisé par** l'utilisation d'un poinçon (6) et d'un emporte-pièce (5) avec un creux (51) permettant d'appuyer sur l'élément élastique (3) et la partie intermédiaire (21) de l'élément de serrage (2) conjointement dans le creux (51) pour former une attache sensiblement tubulaire (1), une protubérance (33) de l'un des éléments (2 ; 3) étant appuyée dans et enclenchée avec une ouverture (23) de l'autre élément (3 ; 2) pendant l'étape d'appui, pour retenir ainsi l'élément élastique (3) sur et au sein de l'élément de serrage (2).

2. Procédé selon la revendication 1, dans lequel l'enclenchement des éléments (2, 3) s'effectue par une partie de tête surdimensionnée (34) de la protubérance (33).

3. Procédé selon l'une quelconque des revendications 1 ou 2, dans lequel l'élément élastique (3) se forme avant l'étape d'appui par une étape d'extrusion.

4. Procédé selon la revendication 3, dans lequel la protubérance (33) se forme dans l'élément élastique (3) pendant l'étape d'extrusion.

5. Procédé selon la revendication 3 ou la revendication 4, dans lequel un moyen positionneur sous forme d'une paroi périphérique (32a, 32b) s'étendant le long d'un ou des deux bords longitudinaux de l'élément élastique (33) se forme(nt) sur l'élément élastique (3) pendant l'étape d'extrusion.
